# EUROPÄISCHE PATENTANMELDUNG

(11) **EP 1 249 458 A1**
(43) Veröffentlichungstag der Anmeldung: **16.10.2002**
(21) Anmeldenummer: 02004077.0
(22) Anmeldetag: 23.02.2002
(51) Int. Cl.: C08G 18/08, C08G 18/79

(54) **Verfahren zur Herstellung von Uretdiongruppen haltigen Polyadditionsverbindungen**

(30) Priorität: 14.04.2001 DE 10118540
(71) Anmelder: Degussa AG, 40474 Düsseldorf (DE)
(72) Erfinder: Wenning, Andreas, Dr., 48301 Nottuln (DE); Weihrauch, Thomas, Dr., 48249 Dülmen (DE)

(57) **Zusammenfassung**

Die Erfindung betrifft ein neues Verfahren zur Lösemittel freien Herstellung von Uretdiongruppen haltigen Polyadditionsverbindungen auf Intensivmischern, insbesondere auf Ein- oder Mehrschneckenextrudern.

## Beschreibung

Die Erfindung betrifft ein neues Verfahren zur Lösemittel freien Herstellung von Uretdiongruppen haltigen Polyadditionsverbindungen.

Uretdiongruppen haltige Polyadditionsverbindungen finden heute als Vernetzer in licht- und wetterstabilen Polyurethan (PUR)-Pulverlacken Verwendung. Die Uretdiongruppen dieser Polyadditionverbindungen spalten während der thermischen Härtung in freie Isocyanatgruppen zurück, die anschließend mit hydroxyfunktionellen Harzen zu Pulverlackfilmen vernetzen.

Die Herstellung von Uretdiongruppen haltigen Polyadditionsverbindungen ist prinzipiell bekannt. Üblicherweise werden diese Verbindungen in Gegenwart geeigneter Lösemittel hergestellt. Der Grund ist die Vermeidung der thermischen Spaltung der Uretdionringe während der Synthese der Polyadditionsverbindungen. Da die Rückspaltung des Uretdionringes in Gegenwart hydroxyfunktioneller Reaktionspartner bereits ab Temperaturen von etwa 110°C erfolgt, werden die Polyadditionsverbindungen unter schonenden Bedingungen bei ca. 60°C produziert. Die Herstellung Uretdiongruppen haltiger Polyadditionsverbindungen im Lösemittel hat nicht nur den Nachteil, dass das Lösemittel bzw. das Lösemittelgemisch nachträglich wieder entfernt werden muss. Es sind auch lange Reaktionszeiten sowie aufwendige, spezielle Technologien zur Lösemittelentfernung erforderlich. Dünnschichter oder Filmtruder sind geeignet, unter Vakuum bei ca. 120°C die Reaktionsprodukte vom Lösemittel zu befreien. Diese Verfahren sind jedoch sehr kostspielig.

Weitaus weniger aufwendig und wesentlich einfacher können Uretdiongruppen haltige Polyadditionsverbindungen kontinuierlich in einem Intensiv-Mischer wie z.B. einem Zweischneckenextruder, hergestellt werden. Das Prinzip dieses Verfahrens besteht darin, dass die Umsetzungsprodukte kurzzeitig auf für Uretdiongruppen haltige Polyisocyanate ungewöhnliche, für die lösemittelfreie Herstellung jedoch notwendige hohe Temperaturen erhitzt werden. Diese kurzzeitige thermische Belastung reicht aus, um die Reaktionspartner homogen zu mischen und umzusetzen. Trotz der Temperaturen im Bereich von 120-190°C spalten die Uretdiongruppen dabei nicht in freie Isocyanatgruppen zurück. Mit diesem Verfahren werden Produkte konstant hoher Qualität erhalten.

Ein derartiges lösemittelfreies Verfahren ist für einige Uretdiongruppen haltige Pulverlackvernetzer bekannt. So beschreibt die EP 669 353 die Herstellung von uretdiongruppenhaltigen Polyadditionsverbindungen mit terminalen Hydroxylgruppen. Als Reaktionspartner für das verwendete Uretdion des 3-Isocyanatomethyl-3,5,5-trimethylcyclohexylisocyanat (auch Isophorondiisocyanat oder kurz IPDI) werden lineare Diole und/oder lineare Polyesterpolyole verwendet. Diese Polyadditionsverbindungen sind somit linear aufgebaut. Die EP 780 417 und EP 825 214 beschreiben die Herstellung von Hydroxylund Uretdiongruppen haltigen Polyadditionsverbindungen aus Uretdionen, Polyolen und Kettenverlängerern wie Polyesterpolyole oder Polycaprolactone. Diese Verbindungen mit endständigen Hydroxylgruppen besitzen eine Funktionalität größer als zwei.

Gemäß der Lehre der EP 669 354 lassen sich nach diesem Verfahren auch ein Polyisocyanat-Uretdion mit Diolen sowie ggf. mit Monoalkoholen oder Monoaminen lösemittelfrei und kontinuierlich in einem Intensiv-Kneter umsetzen. Diese Produkte besitzen terminal entweder NCO-Gruppen, NCO/OH-Gruppen oder sie tragen keine Endgruppenfunktionalität.

Uretdion Pulverlackvernetzer, die durch Umsetzung von Uretdiongruppen haltigen Polyisocyanaten mit Diolen und Ester- und/oder Carbonatgruppen haltigen Kettenverlängerungsmitteln bzw. unter Verwendung von Dimerdiolen hergestellt werden, sind in der EP 639 598 und in der EP 720 994 beschrieben. Die Herstellung dieser Produkte erfolgt lösemittelfrei, aber diskontinuierlich. Kleinere Chargen bis zu wenigen hundert Kilogramm dieser niedrig viskosen Uretdiongruppen haltigen Verbindungen lassen sich problemlos nach diesem Verfahren herstellen. Bei der Produktion wirtschaftlicher Mengen werden längere Zeiten zum Austragen der Produktschmelze aus dem Reaktor erforderlich. Dadurch werden anteilmäßig Uretdionringe gespalten. Somit werden schwankende Produktqualitäten erzeugt. Die EP 1 063 251 beschreibt ein verbessertes Verfahren zur Herstellung solcher Produkte. Dazu werden die Uretdiongruppen haltigen Polyadditionsverbindungen in der Schmelze in statischen Mischern hergestellt. Der Vorteil liegt darin, dass die Verweilzeit der Produkte im Vergleich zum lösemittelfreien Verfahren im Kessel geringer wird. Ein Statikmischer muss zum Mischen viskoser Verbindungen relativ lang ausgelegt werden. Deshalb verweilen die Uretdiongruppen haltigen Polyadditionsverbindungen trotz ihrer relativ niedrigen Viskosität relativ lange im Statikmischer. Die Folge ist, dass immer noch ein merklicher Anteil an Uretdionspaltung auftritt.

Aufgabe der vorliegenden Erfindung war es daher, ein neues Verfahren zur Herstellung Uretdiongruppen haltiger Polyadditionsprodukte aus Uretdiongruppen haltigen Polyisocyanaten und Hydroxylgruppen aufweisenden Polymeren sowie gegebenenfalls weiteren Komponenten zur Verfügung zu stellen, das die genannten Nachteile des Standes der Technik nicht aufweist.

Überraschenderweise wurde gefunden, dass derartige Uretdiongruppen haltige Polyadditionsverbindungen in einem Intensivmischer herstellbar sind, ohne das eine Rückspaltung von Uretdiongruppen auftritt. Um eine vollständige Umsetzung der Ausgangsstoffe zu erhalten, müssen die Verbindungen auf Temperaturen von 110-190°C erhitzt werden. Da diese Verbindungen aber eine niedrigere Schmelzviskosität aufweisen als die Produkte des Stands der Technik aus der EP 669 353, EP 780 417 und EP 825 214, war zu erwarten, dass die Uretdionringe bei geringeren Temperaturen in die freien Isocyanate rückspalten. Es war überraschend, dass diese Verbindungen trotz der hohen Temperaturen im Intensivmischer, die deutlich oberhalb der Zersetzungstemperatur von Uretdionen liegen, keine Rückspaltung aufweisen wie bei einer Herstellung im Kessel oder im Statikmischer. Der Vorteil des erfindungsgemäßen Verfahrens liegt darin, dass durch kurze Verweilzeiten in einem Intensiv-Mischer Produkte hervorragender Qualität erhalten werden.

Gegenstand der vorliegenden Erfindung ist daher ein Verfahren zur Lösemittel freien und kontinuierlichen Herstellung von Uretdiongruppen haltigen Polyadditionsverbindungen, mit einem Schmelzbereich von 40 bis 130°C, wobei die Polyadditionsverbindungen freie, partiell oder total blockierte NCO-Gruppen oder freie, partiell oder total blockierte NCO-Gruppen und terminale Hydroxylgruppen aufweisen, in einem Intensivmischer, durch Umsetzung von
A) mindestens einem Uretdiongruppen haltigen Polyisocyanat mit einer Isocyanatfunktionalität von mindestens 2,0,
B) mindestens einem Hydroxylgruppen aufweisenden Polymer mit mindestens zwei Hydroxylgruppen und mindestens einer weiteren funktionellen Gruppe ausgewählt aus Carbonsäureester-, Carbonat-, Ether-, Thioether-, Esteramid-, Urethan- oder Acetalgruppen und einem Molekulargewicht von 180 bis 3500,
C) gegebenenfalls mindestens einem Diol mit einem Molekulargewicht von 62 bis 400,
D) gegebenenfalls mindestens einer gegenüber Isocyanatgruppen reaktiven monofunktionellen Verbindung.

Die erfindungsgemäß eingesetzten Uretdiongruppen aufweisenden Polyisocyanate A) mit einer mittleren Isocyanatfunktionalität von mindestens 2,0 werden in an sich bekannter Weise aus beliebigen Diisocyanaten durch katalytische Dimerisierung eines Teils der Isocyanatgruppen einfacher Diisocyanate und vorzugsweise sich anschließende Abtrennung des nicht umgesetzten Diisocyanatüberschusses, beispielsweise durch Dünnschichtdestillation, erhalten. Bei den Diisocyanaten zur Herstellung der Polyisocyanate A) handelt es sich um aliphatische, cycloaliphatische, araliphatische und/oder aromatische Diisocyanate. Bevorzugte Beispiele sind 1,4-Diisocyanatobutan, 1,6-Diisocyanatohexan (HDI), 2-Methylpentamethylendiisocyanat-1,5 (MPDI), 2,2,4 (2,4,4)-Trimethylhexamethylendiisocyanat (TMDI), 4,4'-Diisocyanatodicyclohexylmethan (HMDI), 1,3- und 1,4-Diisocyanatocyclohexan, Isophorondiisocyanat (IPDI), Norbornandiisocyanat, Diphenylmethan-2,4' und/oder -4,4'diisocyanat, Xylylendiisocyanat oder 2,4- und 2,6-Toluylendiisocyanat sowie beliebige Gemische dieser Isomeren, wobei diese Diisocyanate allein oder in Mischungen zur Herstellung der Polyisocyanate A) eingesetzt werden können. Auch die Uretdiongruppen aufweisenden Polyisocyanate sind beliebig untereinander mischbar.

Als Katalysatoren zur Herstellung der Polyisocyanate A) aus den genannten Diisocyanaten sind grundsätzlich alle bekannten, die Dimerisierung von Isocyanatgruppen katalysierenden Verbindungen geeignet. Beispiele sind tertiäre organische Phosphine (US-PS 4614785, DE-OSS 1934763, 3900053), Tris-(dialkylamino)-phosphine (DE-OSS 3030513, 3227779, 3437635), substituierte Pyridine (DE-OSS 1081895, 3739549) und substituierte Imidazole oder Benzimidazole (EP 417603).

Bevorzugte Polyisocyanate A) für das erfindungsgemäße Verfahren sind Uretdiongruppen aufweisende Polyisocyanate, die aus Diisocyanaten mit aliphatisch und/oder cycloaliphatisch gebundenen Isocyanatgruppen hergestellt sind.

Besonders bevorzugt werden die Uretdione des Isophorondiisocyanats (IPDI), des 2-Methylpentamethylendiisocyanat-1,5 (MPDI), des 2,2,4 (2,4,4)-Trimethylhexamethylendiisocyanat (TMDI) und des 1,6-Diisocyanatohexan (HDI) verwendet.

Die Verwendung von Isophorondiisocyanat erlaubt die Herstellung eines isocyanuratfreien Uretdions. Dieses Uretdion ist bei Raumtemperatur hochviskos und hat eine Viskosität größer als 10⁶ mPa s, bei 60 °C liegt die Viskosität bei 13 10³ mPa s und bei 80 °C bei 1,4 10³ mPa s. Der freie NCO-Gehalt liegt zwischen 16,8 und 18,5 Gew.-%, d. h. dass mehr oder minder hohe Anteile an Polyuretdion des IPDI im Reaktionsprodukt vorliegen müssen. Der Monomergehalt liegt bei 1 Gew.-%. Der Gesamt-NCO-Gehalt des Reaktionsproduktes nach dem Erhitzen auf 180 - 200 °C beträgt 37,5 - 37,8 Gew.-%.

Während der Dimerisierung anderer aliphatischer Diisocyanate bei an sich bekannten Verfahren und Katalysatoren bildet sich als Nebenprodukt Isocyanurat in unterschiedlichen Mengen, so dass die NCO-Funktionalität der eingesetzten isocyanurathaltigen Polyisocyanat-Uretdione zwischen 2 und 2,6 beträgt.

Als Hydroxylgruppen aufweisende Polymere B) für das erfindungsgemäße Verfahren eignen sich solche, die weitere funktionelle Gruppen enthalten. Hierbei handelt es sich um die an sich bekannten lineare oder verzweigte hydroxylgruppenhaltigen Polyester, Polycaprolactone, Polycarbonate, Polyether, Polythioether, Polyesteramide, Polyurethane oder Polyacetale. Sie besitzen ein zahlenmittleres Molekulargewicht von 180 bis 3500, eine Hydroxylzahl zwischen 50 und 900 mg KOH/g und eine Funktionalität von 2 bis 5.

Bevorzugte Polymere B) sind Estergruppen, Carbonat- oder Ethergruppen aufweisende Polymere eines Molekulargewichtsbereiches von 180 bis 3500, besonders von 250 bis 2 000, insbesondere von 300 bis 1 500. Gemische solcher Polymere sind ebenfalls einsetzbar.

Die Polyester werden z. B. durch Umsetzung von Diolen oder Polyolen ohne weitere funktionelle Gruppen mit unterschüssigen Mengen an Dicarbonsäuren oder Polycarbonsäuren, entsprechenden Carbonsäureanhydriden, entsprechenden Carbonsäureestern von niederen Alkoholen, Lactonen oder Hydroxycarbonsäuren hergestellt.

Zur Herstellung der Polyester B) werden geeignete Polyole und aliphatische, cycloaliphatische, aromatische und/oder heteroaromatische Polycarbonsäuren wie z. B. Bernstein-, Adipin-, Kork-, Azelain- und Sebacinsäure, 2,2,4 (2,4,4)-Trimethyladipinsäure, Butantetracarbonsäure, Ethylentetraessigsäure, Phthalsäure, Isophthalsäure, Terephthalsäuredimethylester, Terephthalsäure-bis-glykolester, Maleinsäure, Maleinsäureanhydrid, dimere oder trimere Fettsäuren eingesetzt. Weiterhin werden auch Hydroxycarbonsäuren wie Hydroxycapronsäure dazu gezählt. Zur Herstellung der Polyesterpolyole können auch beliebige Gemische dieser beispielhaft genannten Ausgangsverbindungen eingesetzt werden.

Bevorzugt werden aliphatische, ggf. alkylverzweigte Polycarbonsäuren eingesetzt. Aber auch Lactone lassen sich mit Polyolen zu Polyesterpolyolen umsetzen. Geeignete Lactone sind beispielsweise β-Propiolacton, γ-Butyrolacton, γ- und δ-Valerolacton, ε-Caprolacton, 3,5,5- und 3,3,5-Trimethylcaprolacton oder beliebige Gemische solcher Lactone.

Carbonatgruppen aufweisende Polymere B) lassen sich beispielsweise durch Umsetzung von Polyolen mit Diarylcarbonaten, wie z.B. Diphenylcarbonat, oder Phosgen herstellen.

Polyetherpolyole sind durch Umsetzung mehrwertiger Alkohole mit Alkylenoxiden, wie z. B. Ethylenoxid oder Propylenoxid, erhältlich.

Geeignete Polyole zur Herstellung der Hydroxylgruppen aufweisenden Polymere sind z. B. die Diole C) sowie Glycerin, Trimethylolpropan, Ditrimethylolpropan, Trimethylolethan, Hexantriol-1,2,6, Butantriol-1,2,4, 1,3,5-Tris-(2-hydroxyethyl)-isocyanurat, Pentaerythrit, Mannit oder Sorbit.

Als Diole C) zur Herstellung der Uretdiongruppen aufweisenden Polyadditionsverbindungen eignen sich alle in der PUR-Chemie üblicherweise eingesetzten Diole des Molekulargewichtes von mindestens 62 bis 400. Beispielsweise handelt es sich um Ethylenglykol, Diethylenglykol, Triethylenglykol, Propylenglykol wie 1,2- und 1,3-Propandiol, 2-Methylpropandiol-1,3, 2,2-Dimethylpropandiol-1,3 (Neopentylglykol), Butandiol-1,4, Pentandiol-1,5, 3-Methylpentandiol-1,5, Hexandiol-1,6, 2,2,4 (2,4,4)-Trimethylhexandiol, Oktandiol-1,8, Dodecandiol-1,12, trans- und cis-1,4-Cyclohexandimethanol, Dimerdiole, erhältlich durch Hydrierung von dimeren Fettsäuren und/oder deren Estern z. B. gemäß DE 17 68 313 oder EP 0 720 994 oder Hydroxypivalinsäureneopentylglykolester.

Das Mischungsverhältnis der Komponente B) und C) ist frei wählbar. Bevorzugt werden sie im Gewichtsverhältnis von 5 : 95 bis 90 : 10 eingesetzt.

Beim erfindungsgemäßen Verfahren können gegebenenfalls auch noch weitere gegenüber Isocyanatgruppen reaktive monofunktionelle Verbindungen D) mitverwendet werden. Hierbei handelt es sich insbesondere um Monoalkohole wie Methanol, Ethanol, n-Propanol, Isopropanol, n-Butanol, Isobutanol, sec-Butanol, die isomeren Pentanole, Hexanole, Octanole und Nonanole, n-Decanol, n-Dodecanol, n-Tetradecanol, n-Hexadecanol, n-Octadecanol, Cyclohexanol, die isomeren Methylcyclohexanole sowie Hydroxymethylcyclohexan oder einfache aliphatische bzw. cycloaliphatische Monoamine wie Methylamin, Ethylamin, n-Propylamin, Isopropylamin, die isomeren Butylamine, Pentylamine, Hexylamine und Octylamine, n-Dodecylamin, n-Tetradecylamin, n-Hexadecylamin, n-Octadecylamin, Cyclohexylamin, die isomeren Methylcyclohexylamine sowie Aminomethylcyclohexan, sekundäre Monoamine, wie Dimethylamin, Diethylamin, Dipropylamin, Diisopropylamin, Dibutylamin, Diisobutylamin, Bis(2-ethylhexyl)-amin, N-Methyl- und N-Ethylcyclohexylamin sowie Dicyclohexylamin.

Diese monofunktionellen Verbindungen D) kommen in Mengen von bis zu 40 Gew.-%, bezogen auf die Gesamtmenge an gegenüber Isocyanaten reaktiven Ausgangsverbindungen B) und C) zum Einsatz.

Erfindungsgemäß können auch Diisocyanate eingesetzt werden. Bei diesen gegebenenfalls mitverwendeten Diisocyanaten handelt es sich um die oben angegebenen, zur Herstellung der Ausgangsverbindungen A) geeigneten Diisocyanate. Sie können bis zu 60 Gew.-%, bezogen auf das Gesamtgewicht der Ausgangsverbindungen A) und B) ausmachen. Für das erfindungsgemäße Verfahren geeignete Gemische sind z. B. auch Lösungen von Uretdionen in Diisocyanaten, wie sie nach katalytischer Dimerisierung und ohne Abtrennung des nicht umgesetzten Diisocyanates erhalten werden.

Beim erfindungsgemäßen Verfahren werden die Uretdiongruppen aufweisenden Polyisocyanate A), gegebenenfalls unter Mitverwendung weiterer Diisocyanate, mit dem Polymer B) und gegebenenfalls C) sowie weiteren gegenüber Isocyanaten reaktiven, monofunktionellen Verbindungen D) umgesetzt.

Dazu werden die Ausgangsverbindungen in entsprechenden Mengen mit Hilfe geeigneter handelsüblicher Pumpen kontinuierlich einem Intensivmischer, insbesondere in einem Ein- oder Mehrschneckenextruder, zudosiert. Die lösemittelfreie Synthese erfordert Temperaturen zwischen 110 °C und 190 °C. Diese Temperaturen liegen bereits deutlich im Respaltbereich für Uretdione, ohne dass jedoch freie Isocyanatgehalte resultierten und damit unkontrollierte Reaktionsabläufe zu beobachten waren. Als vorteilhaft erwiesen sich dabei die kurzen Reaktionszeiten von < 5 Minuten, vorzugsweise < 3 Minuten, insbesondere < 2 Minuten.

Weiterhin von prinzipieller Natur ist, dass die kurzzeitige thermische Belastung ausreicht, um die Reaktionspartner homogen zu mischen und dabei vollständig oder weitestgehend umzusetzen. Anschließend wird entsprechend der Gleichgewichtseinstellung gezielt abgekühlt und falls erforderlich, der Umsatz vervollständigt.

Die Umsetzungsprodukte werden dem Intensivmischer in getrennten Produktströmen zugeführt, wobei die Ausgangskomponenten bis auf maximal 100 °C, vorzugsweise bis auf maximal 80 °C, vorgewärmt werden können. Handelt es sich um mehr als zwei Produktströme, können diese auch gebündelt zudosiert werden. Die Komponente B) und C) sowie monofunktionellen Verbindungen D) und Katalysatoren können auch zu einem Produktstrom zusammengefasst werden. Ebenfalls kann die Reihenfolge der Produktströme variabel gehandhabt werden sowie die Eintrittsstelle für die Produktströme unterschiedlich sein.
Zur Nachreaktion, Abkühlung, Zerkleinerung und Absackung werden bekannte Verfahren und Technologien verwendet.

Die nach dem erfindungsgemäßen Verfahren erhältlichen Uretdiongruppen haltigen Polyadditionsverbindungen stellen wertvolle Ausgangsverbindungen zur Herstellung von Polyurethan-Kunststoffen nach dem Isocyanat-Polyadditionsverfahren dar. Sie finden insbesondere Verwendung als Vernetzerkomponenten in thermoreaktiven abspaltfreien, transparenten oder pigmentierten Polyurethan-Pulverlacken.

Die erfindungsgemäßen Verfahren zur Herstellung der Uretdiongruppen haltigen Polyadditionsverbindungen wird nachfolgend anhand von Beispielen beschrieben.

### Beispiele

### Herstellung der erfindungsgemäßen Verfahrensprodukte

### Allgemeine Herstellvorschrift

In das erste Gehäuse eines Extruders (z.B. Zweischneckenextruder) wird das IPDI-Uretdion mit einer Temperatur von 60 bis 110°C eingespeist, wobei gleichzeitig die Mischung der NCOreaktiven Komponenten (z.B. Diole, monofunktionelle Alkohole, OH-Gruppen-tragende Oligoester, Lactame etc.) mit einer Temperatur von 25 bis 150°C zudosiert werden. Einer der beiden Stoffströme enthält den Katalysator. Der eingesetzte Extruder besteht aus 10 Gehäusen, die über 5 Heizzonen temperiert werden. Zone 1 : 60-180°C, Zone 2: 60-170°C, Zone 3: 60-150°C, Zone 4: 80-150°C, Zone 5: 60-160°C. Alle Temperaturen stellen Soll-Temperaturen dar. Die Regelung erfolgt über Elektrobeheizung bzw. Wasserkühlung. Die Düse wird ebenfalls elektrisch beheizt. Die Schneckendrehzahl beträgt 50 bis 400 Upm. Der Durchsatz beträgt 10 bis 160 kg/h. Das Reaktionsprodukt wird abgekühlt, gebrochen und gegebenenfalls gemahlen.

### Beispiel 1

IPDI-Uretdion (NCO-Frei-Gehalt von 17,7 %, NCO-Latent-Gehalt von 20,1 %) wird mit einer Mischung aus 1,4-Butandiol, dem Di-Ester aus 1,4-Butandiol und Adipinsäure (OH-Zahl der Mischung 802 mg KOH/g) und 2-Ethylhexanol umgesetzt. Als Katalysator wird 0,1 % Dibutylzinn(IV)dilaurat (DBTL) eingesetzt. Das Verhältnis von NCO-Gruppen zu OH-Gruppen beträgt 14 Mole zu 16 Mole, wobei das Molekülgerüst NCO-terminiert jedoch mit 2-Ethylhexanol blockiert ist (2 Mole der 16 Mole OH-Gruppen stammen also vom 2-Ethylhexanol). Die Kettenlänge beträgt n = 7.
Im Produkt beträgt der theoretische NCO-Frei-Gehalt 0 %. Gefunden werden 0,23 %. Der theoretische NCO-Latent-Gehalt liegt bei 15,1 %, der praktische bei 14,7 %.

### Beispiel 2 (Vergleich)

Die Ausgangsverbindungen aus Beispiel 1 werden in einer Kombination aus einem Statikmischer (Länge 60 mm, D 6 mm, Fa. Sulzer SMX-L) und einem Rohrreaktor umgesetzt, wobei der Rohrreaktor aus drei gesondert über Doppelmantel beheizten Segmenten der Volumina 250 ml, 260 ml, 550 ml, besteht. Der Durchsatz beträgt 6,2 kg/h. Die Temperierung des Mischers ist 120°C, die Temperatur der Rohrschlange 1 ist 140°C, die der Rohrschlange 2 130°C und die der Rohrschlange 3 120°C. Das Produkt tritt mit einer Temperatur von 155°C aus. Der NCO-Frei-Gehalt im Produkt lag bei 1,3 % (Theorie 0 %). Der NCO-Latent-Gehalt lag bei 13,7 % (Theorie 15,1 %).
Das Vergleichsbeispiel zeigt, dass das nach dem im Beispiel 1 beschriebenen erfindungsgemäßen Verfahren erhaltene Uretdiongruppen haltige Polyadditionsprodukt einen deutlich geringeren NCO-Frei-Gehalt und einen höheren NCO-Latent-Gehalt aufweist. Beim Produkt aus Beispiel 2 ist somit im Gegensatz zum Produkt aus Beispiel 1 in erheblichem Maße eine Spaltung der Uretdiongruppen unter Freisetzung von Isocyanatgruppen aufgetreten.

### Beispiel 3

IPDI-Uretdion (NCO-Frei-Gehalt von 17,5 %, NCO-Latent-Gehalt von 20,3 %) wird mit einer Mischung aus 1,6-Hexandiol, dem Di-Ester aus 1,4-Butandiol und Adipinsäure (OH-Zahl des Esters 344 mg KOH/g) und dem Polycarbonat aus Neopentylglycolcarbonat und 1,4-Butandiol (OH-Zahl 363 mg KOH/g) umgesetzt. Als Katalysator wird 0,2 % Dibutylzinn(IV)dilaurat (DBTL) eingesetzt.
Das Verhältnis von NCO-Gruppen zu OH-Gruppen beträgt 10 Mole zu 12 Mole. Im "OH-Gemisch" beträgt das molare Verhältnis von 1,6-Hexandiol zum Oligoester und Polycarbonat 4 zu 1 zu 1. Die Kettenlänge ist n = 5.
Im Produkt beträgt der theoretische NCO-Frei-Gehalt 0 %. Gefunden werden 0,3 %. Der theoretische NCO-Latent-Gehalt liegt bei 13,9 %, der praktische bei 13,4 %.

### Beispiel 4

IPDI-Uretdion (NCO-Frei-Gehalt von 17,4 %, NCO-Latent-Gehalt von 20,4 %) wird mit einem Polycaprolacton (OH-Zahl 210 mg KOH/g) umgesetzt. Als Katalysator wird 0,15 % Dibutylzinn(IV)dilaurat (DBTL) eingesetzt.
Das Verhältnis von NCO-Gruppen zu OH-Gruppen beträgt 8 Mole zu 6 Mole. Die Kettenlänge beträgt n = 4.
Im Produkt beträgt der theoretische NCO-Frei-Gehalt 2,4 %. Gefunden werden 2,6 %. Der theoretische NCO-Latent-Gehalt liegt bei 11,0 %, der praktische bei 10,7 %.

## Patentansprüche

1. Verfahren zur Lösemittel freien und kontinuierlichen Herstellung von Uretdiongruppen haltigen Polyadditionsverbindungen, mit einem Schmelzbereich von 40 bis 130°C, wobei die Polyadditionsverbindungen freie, partiell oder total blockierte NCO-Gruppen oder freie, partiell oder total blockierte NCO-Gruppen und terminale Hydroxylgruppen aufweisen, in einem Intensivmischer, durch Umsetzung von
A) mindestens einem Uretdiongruppen haltigen Polyisocyanat mit einer Isocyanatfunktionalität von mindestens 2,0,
B) mindestens einem Hydroxylgruppen aufweisenden Polymer mit mindestens zwei Hydroxylgruppen und mindestens einer weiteren funktionellen Gruppe ausgewählt aus Carbonsäureester-, Carbonat-, Ether-, Thioether-, Esteramid-, Urethan- oder Acetalgruppen und einem Molekulargewicht von 180 bis 3500,
C) gegebenenfalls mindestens einem Diol mit einem Molekulargewicht von 62 bis 400,
D) gegebenenfalls mindestens einer gegenüber Isocyanatgruppen reaktiven monofunktionellen Verbindung.

2. Verfahren gemäß Anspruch 1,
**dadurch gekennzeichnet,**
**dass** Polyisocyanate A) auf Basis von Diisocyanaten mit aliphatisch, cycloaliphatisch, araliphatisch und/oder aromatisch gebundenen Isocyanatgruppen oder deren Gemische eingesetzt werden.

3. Verfahren nach einem der Ansprüche 1 bis 2,
**dadurch gekennzeichnet,**
**dass** Polyisocyanate A) auf Basis von 1,4-Diisocyanatobutan, 1,6-Diisocyanatohexan (HDI), 2-Methylpentamethylendiisocyanat-1,5 (MPDI), 2,2,4 (2,4,4)-Trimethylhexamethylendiisocyanat (TMDI), 4,4'-Diisocyanatodicyclohexylmethan (HMDI), 1,3- und 1,4-Diisocyanatocyclohexan, Isophorondiisocyanat (IPDI), Norbornandiisocyanat, Diphenylmethan-2,4' und/oder -4,4'-diisocyanat, Xylylendiisocyanat oder 2,4- und 2,6-Toluylendiisocyanat eingesetzt werden.

4. Verfahren nach mindestens einem der Ansprüche 1 bis 3,
**dadurch gekennzeichnet,**
**dass** Polyisocyanate A) auf Basis von Isophorondiisocyanat, 2-Methylpentamethylendiisocyanat-1,5, 2,2,4 (2,4,4)-Trimethylhexamethylendiisocyanat und/oder 1,6-Diisocyanatohexan eingesetzt werden.

5. Verfahren nach mindestens einem der Ansprüche 1 bis 4,
**dadurch gekennzeichnet,**
**dass** als Polymere B) lineare oder verzweigte hydroxylgruppenhaltige Polyester, Polycaprolactone, Polycarbonate, Polyether, Polythioether, Polyesteramide, Polyurethane oder Polyacetale mit einem zahlenmittleren Molekulargewicht von 180 bis 3500, einer Hydroxylzahl zwischen 50 und 900 mg KOH/g und einer Funktionalität von 2 bis 5 eingesetzt werden.

6. Verfahren nach Anspruch 5,
**dadurch gekennzeichnet,**
**dass** Polyester, Polycaprolactone oder Polycarbonate mit einem zahlenmittleren Molekulargewicht von 180 bis 3500, einer Hydroxylzahl zwischen 50 und 900 mg KOH/g und einer Funktionalität von 2 bis 5 eingesetzt werden.

7. Verfahren nach mindestens einem der Ansprüche 1 bis 6,
**dadurch gekennzeichnet,**
**dass** als Diole C) Ethylenglykol, Diethylenglykol, Triethylenglykol, 1,2-, 1,3-Propandiol, 2-Methylpropandiol-1,3, 2,2-Dimethylpropandiol-1,3, Butandiol-1,4, Pentandiol-1,5, 3-Methylpentandiol-1,5, Hexandiol-1,6, 2,2,4 (2,4,4)-Trimethylhexandiol, Oktandiol-1,8, Dodecandiol-1,12, trans- und cis-1,4-Cyclohexandimethanol, Dimerdiole oder Hydroxypivalinsäureneopentylglykolester allein oder in Mischungen eingesetzt werden.

8. Verfahren nach mindestens einem der Ansprüche 1 bis 7,
**dadurch gekennzeichnet,**
**dass** das als gegenüber Isocyanatgruppen reaktive monofunktionelle Verbindungen D) Monoalkohole und/oder Monoamine eingesetzt werden.

9. Verfahren nach Anspruch 8,
**dadurch gekennzeichnet,**
**dass** Methanol, Ethanol, n-Propanol, Isopropanol, n-Butanol, Isobutanol, sec-Butanol, die isomeren Pentanole, Hexanole, Octanole und Nonanole, n-Decanol, n-Dodecanol, n-Tetradecanol, n-Hexadecanol, n-Octadecanol, Cyclohexanol, die isomeren Methylcyclohexanole, Hydroxymethylcyclohexan, Methylamin, Ethylamin, n-Propylamin, Isopropylamin, die isomeren Butylamine, Pentylamine, Hexylamine und Octylamine, n-Dodecylamin, n-Tetradecylamin, n-Hexadecylamin, n-Octadecylamin, Cyclohexylamin, die isomeren Methylcyclohexylamine, Aminomethylcyclohexan, Dimethylamin, Diethylamin, Dipropylamin, Diisopropylamin, Dibutylamin, Diisobutylamin, Bis(2-ethylhexyl)-amin, N-Methyl- und N-Ethylcyclohexylamin oder Dicyclohexylamin eingesetzt werden.

10. Verfahren nach mindestens einem der Ansprüche 1 bis 9,
**dadurch gekennzeichnet,**
**dass** die Umsetzung in einem Ein- oder Mehrschneckenextruder erfolgt.

11. Verfahren gemäß Anspruch 10,
**dadurch gekennzeichnet,**
**dass** die Umsetzung in einem Zweischneckenextruder erfolgt.

12. Verfahren gemäß Anspruch 10,
**dadurch gekennzeichnet,**
**dass** die Umsetzung in einem Planetwalzenextruder erfolgt.

13. Verfahren gemäß Anspruch 10,
**dadurch gekennzeichnet,**
**dass** die Umsetzung in einem Ringextruder erfolgt.

14. Verfahren nach mindestens einem der Ansprüche 1 bis 9,
**dadurch gekennzeichnet,**
**dass** die Umsetzung in einem Intensivkneter erfolgt.

15. Verfahren nach mindestens einem der Ansprüche 1 bis14,
**dadurch gekennzeichnet,**
**dass** die Temperatur im Intensivmischer bis 190°C beträgt.

16. Verfahren nach mindestens einem der Ansprüche 1 bis 15,
**dadurch gekennzeichnet,**
**dass** die Temperatur im Intensivmischer bis 180°C beträgt.

17. Verfahren nach mindestens einem der Ansprüche 1 bis 16,
**dadurch gekennzeichnet,**
**dass** die Temperatur im Intensivmischer bis 170°C beträgt.

18. Verfahren nach mindestens einem der Ansprüche 1 bis 17,
**dadurch gekennzeichnet,**
**dass** die Intensivmischer durch geeignete Bestückung der Mischkammern und Zusammenstellung der Schneckengeometrie einerseits zu einer intensiven, raschen Durchmischung und zu hochviskosen Produktströmen bei gleichzeitigem intensiven Wärmeaustausch führen, und andererseits eine gleichmäßige Durchströmung in Längsrichtung mit möglichst einheitlicher Verweilzeit bewirken.

19. Verfahren nach mindestens einem der Ansprüche 1 bis 18,
**dadurch gekennzeichnet,**
**dass** Umsetzungsprodukte und Katalysator in getrennten Eduktströmen dem Intensivmischer zugeführt werden.

20. Verfahren nach mindestens einem der Ansprüche 1 bis 19,
**dadurch gekennzeichnet,**
**dass** bei mehr als zwei Eduktströmen diese gebündelt oder einzeln zugeführt werden.

21. Verfahren nach mindestens einem der Ansprüchen 1 bis 20,
**dadurch gekennzeichnet,**
**dass** die Komponenten B), C) und D) und/oder Katalysator/en zu einem Produktstrom zusammengefasst werden können.

22. Verfahren nach mindestens einem der Ansprüchen 1 bis 20,
**dadurch gekennzeichnet,**
**dass** die Polyisocyanate A) und weitere Diisocyanate und/oder Katalysator/en zu einem Produktstrom zusammengefasst werden.

23. Verfahren nach mindestens einem der Ansprüche 1 bis 22,
**dadurch gekennzeichnet,**
**dass** einer oder mehrere der Eduktströme aus Feststoffen besteht.

24. Verfahren nach mindestens einem der Ansprüche 1 bis 23,
**dadurch gekennzeichnet,**
**dass** die gegenüber den Polyisocyanaten A) inerten Zuschlagstoffe gemeinsam mit diesen Stoffen zu einem Eduktstrom zusammengefasst werden.

25. Verfahren nach mindestens einem der Ansprüche 1 bis 24,
**dadurch gekennzeichnet,**
**dass** die Eintrittstellen der Eduktströme in der Reihenfolgen örtlich variabel und zeitlich versetzt gehandhabt werden.

26. Verfahren nach mindestens einem der Ansprüche 1 bis 25,
**dadurch gekennzeichnet,**
**dass** eine Nachreaktion angefügt wird.

27. Verfahren nach mindestens einem der Ansprüche 1 bis 26,
**dadurch gekennzeichnet,**
**dass** die Konfektionierung je nach Viskosität des den Intensivmischer und/oder die Nachreaktionszone verlassenden Produktes zunächst durch weitere Abkühlung auf eine, zur späteren Abfüllung/Silierung hinreichende Temperatur eingeleitet wird, und der Abfüllung/Silierung eine Zerkleinerung vorgeschaltet ist, wobei während des Abkühlens an geeigneter Stelle eine Vorprägung des bevorzugt band- oder filmförmig anfallenden Produktes erfolgen kann, die eine nachfolgende Zerkleinerung in eine gewünschte Partikelgröße/Granulatform vorbereiten kann und den Staubanteil verringern kann.

28. Verwendung der Uretdiongruppen haltigen Polyadditionsprodukte gemäß den Ansprüchen 1 bis 27, zur Herstellung von abspaltfreien transparenten oder pigmentierten Polyurethan-Pulverlacken.
